# EUROPEAN PATENT SPECIFICATION

(11) **EP 0 998 514 B1**
(45) Date of publication and mention of the grant of the patent: **10.03.2004**
(21) Application number: 98938218.9
(22) Date of filing: 31.07.1998
(51) Int. Cl.: C08G 65/22, C08G 65/26, C11D 1/72

(54) **COMPOSITIONS INCLUDING ETHER-CAPPED POLY(OXYALKYLATED) ALCOHOL SURFACTANTS**
ZUSAMMENSETZUNGEN MIT ETHERVERKAPPTEN POLY(OXYALKYL)ALKOHOLTENSIDEN
COMPOSITIONS RENFERMANT DES TENSIOACTIFS A BASE D'ALCOOLS POLY(OXYALKYLES) COIFFES PAR UN ETHER

(30) Priority: 02.08.1997 US 54688 P
(43) Date of publication of application: 10.05.2000
(73) Proprietor: THE PROCTER & GAMBLE COMPANY, Cincinnati, Ohio 45202 (US)
(72) Inventor: SCHEPER, William, Michael, Lawrenceburg, IN 47025 (US); SIVIK, Mark, Robert, Fairfield, OH 45014 (US)
(74) Representative: Brooks, Maxim Courtney
(86) International application number: PCT/US1998/015976
(87) International publication number: WO 1999/006466

(56) References cited:
- WO-A-97/22651
- WO-A-98/11185
- DE-A- 2 225 318
- US-A- 4 978 805
- US-A- 5 294 365

## Description

### Technical Field

The present invention relates to detergent compositions having low-foaming nonionic surfactants and more particularly to compositions for cleaning dishes or hard surfaces having ether-capped poly(oxyalkylated) alcohol surfactants which have superior spotting and filming benefits in dishwashing and hard surface cleaning applications, as well as suds suppression in detergent compositions.

### Background of the Invention

Dishwashing and hard surface cleaning, in particular automatic dishwashing in domestic appliances, is an art very different from fabric laundering. Domestic fabric laundering is normally done in purpose-built machines having a tumbling action. These are very different from spray-action domestic automatic dishwashing appliances. The spray action in the latter tends to cause foam. Foam can easily overflow the low sills of domestic dishwashers and slow down the spray action, which in turn reduces the cleaning action. Thus in the distinct field of domestic machine dishwashing, the use of common foam-producing laundry detergent surfactants is normally restricted. These aspects are but a brief illustration of the unique formulation constraints in the domestic dishwashing and hard surface cleaning fields.

One solution to this foaming problem has been to include a suds suppressor, typically a silicone suds suppressor. However, this solution while it works to a certain extent in fabric laundering compositions, fails in domestic dishwashers. The high shear forces involved in domestic dishwashers breaks down the silicone suds suppressors, so any suds suppressors present at the start of the wash is gone before the end. The silicone suds suppressors are not robust enough to survive in the environment of a domestic dishwasher. Even in laundry applications, while less shear than that in a domestic dishwasher, there is still a drop off in suds suppression towards the end of the washing cycle, because of the break down of the silicone suds suppressor. One alternative would be increase the amount of silicone suds suppressor present, however the cost of silicone suds suppressors and the fact that they have a tendency to redeposit on hydrophobic surfaces, such as plastic, makes this an undesirable solution. There remains today the need for a viable and cost effective alternative to silicone suds suppressor suitable for use in automatic dishwashers as well as laundry washing machines.

On account of the foregoing technical constraints as well as consumer needs and demands, these compositions are undergoing continual change and improvement. Moreover environmental factors such as the restriction of phosphate, the desirability of providing ever-better cleaning results with less product, providing less thermal energy, and less water to assist the washing process, have all driven the need for improved compositions.

However, many compositions heretofore proposed for cleaning dishware and hard surfaces have had aestethic and technical disadvantages, not the least of which is undesirable spots and films on the cleaned surfaces. These undesirable spots and films may be caused by redeposition of soils and cleaning agents such as surfactants which have a low solubility in water. Alternatively, the composition may provide desirable results with respect to undesirable spots and films, and provide excellent cleaning but be totally unsuitable because of the high foam it produces. In addition, there continues to be a need for better cleaning, especially for reduction of spotting and filming and removal of greasy soils. Accordingly, the need remains for compositions which can deliver improved spotting and filming benefits as well as greasy soil removal while providing improved spotting and filming reduction benefits, as well as providing suds suppression which is robust enough to survive the washing environment in which it is deployed.

### BACKGROUND ART

U.S. Patent 4,272,394, issued June 9, 1981, U.S. Patent 5,294, 365, issued March 15, 1994 U.S. Patent No. 4,248,729, issued February 3, 1981; U.S. Patent No. 4,284,532, issued August 18, 1981; U.S. Patent No. 4,627,927, issued December 9, 1986; U.S. Patent No. 4,790,856, issued December 13, 1988; U.S. Patent No. 4,804,492, issued February 14, 1989; U.S. Patent No. 4,770,815, issued September 13, 1989; U.S. Patent No. 4,978,805 U.S. Patent No. 5,035,814, issued July 30, 1991; U.S. Patent No. 5,047,165, issued September 10, 1991; U.S. Patent No. 5,419,853, issued May 30, 1995; U.S. Patent No 5,294,365, issued March 15, 1994; GB Application No. 2,144,763, published March 13, 1985; GB Application No. 2,154,599, published September 9, 1985; WO Application No. 9,296,150, published April 16, 1992; WO 94/22800, published October 13, 1994, WO.93/04153, published March 4, 1993, WO 97/22651, published June 26, 1997, EP Application No. 342,177, published November 15, 1989 and "Glyceryl Bisether Sulfates. 1: Improved Synthesis" Brian D. Condon; Journal Of the American Chemical Society, Vol. 71, no. 7 (July 1994).

### Summary of the Invention

This need is met by the present invention wherein detergent compositions, and in particular, a dish or hard surface cleaning composition having a low-foaming nonionic surfactant are provided. The compositions employ the novel surfactants of the present invention, either alone or in combination with other surfactants, to provide improved spotting and filming performance as well as improved cleaning performance on greasy soils and suds or foam suppression. While not wishing to be bound by theory, it is believed the alcohol surfactants of the present invention deliver superior spotting and filming benefits via improved sheeting action. As for improved cleaning performance on greasy soils, such benefits are shown when the alcohol surfactants of the present invention are employed in conjunction with a high cloud point nonionic surfactant as disclosed in detail herein. Lastly, the alcohol surfactants of the present invention also act to reduce the suds or foaming associated with food soils or various other cleaning agents and allow the use of soluble surfactants, which are high sudsing, such as amine oxides.

In accordance with a first aspect of the present invention, a detergent composition is provided. The composition comprises from 0.1% to 15% by weight of the composition of an ether-capped poly(oxyalkylated) alcohol surfactant. The alcohol has the formula:

R¹O[CH₂CH(R³)O]ₓ[CH₂]ₖCH(OH)[CH₂]ⱼOR²

wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1;
and from 0.1% to 99% by weight of the composition of detergent adjunct ingredients.

R¹ and R² are preferably linear or branched, saturated or unsaturated, aliphatic or aromatic hydrocarbon radicals having preferably from 8 to 18 carbon atoms. H or a linear aliphatic hydrocarbon radical having from 1 to 2 carbon atoms is most preferred for R³. Preferably, x is an integer having an average value of from 1 to 20, more preferably from 6 to 15. Also, preferred in the present invention are alcohol surfactants as described above wherein the cloud point of the surfactant is less than about 20°C.

In accordance with a second aspect of the present invention, a method of suds suppression is provided. The method comprises the step of adding an effective amount of a suds suppressing composition to an aqueous cleaning solution, the composition comprising from 0.1% to 15% by weight of the composition of an ether-capped poly(oxyalkylated) alcohol surfactant. The alcohol has the formula:

R¹O[CH₂CH(R³)O]ₓ[CH₂]ₖCH(OH)[CH₂]ⱼOR²

wherein R¹, R², R³, x, k and j are hereinbefore defined; and from 0.1% to 99% by weight of the composition of detergent adjunct ingredients. Preferably, the aqueous cleaning solution is in a washing appliance, such as a automatic dishwasher. An effective amount of the suds suppressing composition is added to the aqueous cleaning solution, preferably from 0.1% to 15% more preferably from 0.1% to 10%, even more preferably 0.5% to 5% by weight

The composition can take granular, tablet or liquid forms including liqui-gels and gels. In addition, the compositions may include adjunct ingredients including builders, surfactants, enzymes, bleaching agents and anti-tarnishing agents.

As already noted, the invention has advantages, including superior spotting and filming reduction benefits as well as excellent greasy soil removal, good dishcare, suds suppression and good overall cleaning.

Accordingly, it is an aspect of the present invention to provide a composition which includes a low-foaming nonionic surfactant having superior spotting and filming reduction benefits as well as excellent greasy soil removal, good dishcare, suds suppression and good overall cleaning. It is a further aspect of the present invention to provide a composition having an ether-capped poly(oxyalkylated) alcohol surfactant. It is a further aspect of the present invention to provide a composition which suppresses or reduces the suds associated with food soils, for example egg soils, or various other cleaning agents, for example surfactants. These and other aspects, features and advantages will be apparent from the following description and the appended claims.

There is also provided a rinse-aid composition comprising from 0.1% to 15% by weight of the composition of the ether-capped polyloxyalkylated) alcohol surfactant described herein above and from 0.1% to 99% by weight of the composition of detergent adjust ingredients.

All parts, percentages and ratios used herein are expressed as percent weight unless otherwise specified.

### BRIEF DESCRIPTION OF THE DRAWINGS

Fig1. is a graph of arm rotation vs. time showing the suds suppressing effect that the novel alcohol surfactants of the present invention has over high sudsing surfactants.
Fig2. is a graph of arm rotation vs. time showing the suds suppressing effect that the novel alcohol surfactants of the present invention has in the presence of high sudsing soil.

### Detailed Description of the Preferred Embodiments

Once again, the present invention is directed toward a low-foaming nonionic surfactant for use in detergent compositions. While compositions for cleaning dishes and other hard surfaces are the preferred utility for the surfactants of the present invention, the disclosed compounds may also be employed in laundry and skin care compositions.

The compositions of the present invention comprise the novel ether-capped polyloxyalkylated) alcohol surfactants as disclosed in detail herein and may optionally include various other detergent adjunct ingredients including, but not limited to, detersive enzymes (to assist with tough food cleaning, especially of starchy and proteinaceous soils), builder and a bleaching agent (such as a chlorine bleach or a source of hydrogen peroxide). Bleaching agents useful herein include chlorine oxygen bleaches (e.g., hypochlorite; no NaDCC) and sources of hydrogen peroxide, including any common hydrogenperoxide releasing salt, such as sodium perborate, sodium percarbonate, and mixtures thereof. Also useful are sources of available oxygen such as persulfate bleach (e.g., OXONE, manufactured by DuPont). In the preferred embodiments, additional ingredients such as water-soluble silicates (useful to provide alkalinity and assist in controlling corrosion), dispersant polymers (which modify and inhibit crystal growth of calcium and/or magnesium salts), chelants (which control transition metals), and pH control. agents are present. Additional bleach-modifying materials such as conventional bleach activators, e.g. TAED and/or bleach catalysts, may be added, provided that any such bleach-modifying materials are delivered in such a manner as to be compatible with the purposes of the present invention. The present detergent compositions may, moreover, comprise one or more processing aids, fillers, perfumes, conventional enzyme particle-making materials including enzyme cores or "nonpareils", as well as pigments, and the like.

In general, materials used for the production of the compositions herein are preferably checked for compatibility with spotting/filming on surfaces such as glassware. Test methods for spotting/filming are generally described in the automatic dishwashing detergent literature, including DIN and ASTM test methods. Certain oily materials, especially at longer chain lengths, and insoluble materials such as clays, as well as long-chain fatty acids or soaps which form soap scum are therefore preferably limited or excluded from the instant compositions.

Amounts of the essential ingredients can vary within wide ranges, however preferred compositions herein (which typically have a 1% aqueous solution pH of above about 8, more preferably from 9.5 to 12, most preferably from 9.5 to 11) are those wherein there is present: from 5% to 90%, preferably from 5% to 75%, of builder; from 0.1% to 40%, preferably from 0.5% to 30%, of bleaching agent; from 0.1% to 15%, preferably from 0.2% to 10%, of the nonionic alcohol surfactant; from 0.0001% to 1%, preferably from 0.001% to 0.05%, of a metal-containing bleach catalyst (most preferred cobalt catalysts useful herein are present at from 0.001% to 0.01%); and from 0.1% to 40%, preferably from 0.1% to 20% of a water-soluble (two ratio) silicate. Such fully-formulated embodiments typically further comprise from 0.1% to 15% of a polymeric dispersant, from 0.01% to 10% of a chelant, and from 0.00001% to 10% of a detersive enzyme, though further additional or adjunct ingredients may be present. Detergent compositions herein in granular or tablet form typically limit water content, for example to less than about 7% free water, for best storage stability. Of course, the compositions may also be in liquid or gel form as well.

While the present invention compositions may be formulated using chlorine-containing bleach additives, preferred compositions of this invention (especially those comprising detersive enzymes) are substantially free of chlorine bleach. By "substantially free" of chlorine bleach is meant that the formulator does not deliberately add a chlorine-containing bleach additive, such as a dichloroisocyanurate, to the preferred composition. However, it is recognized that because of factors outside the control of the formulator, such as chlorination of the water supply, some non-zero amount of chlorine bleach may be present in the wash liquor. The term "substantially free" can be similarly constructed with reference to preferred limitation of other ingredients.

By "effective amount" herein is meant an amount which is sufficient, under whatever comparative test conditions are employed, to enhance cleaning of a soiled surface. Likewise, the term "catalytically effective amount" refers to an amount of metal-containing bleach catalyst which is sufficient under whatever comparative test conditions are employed, to enhance cleaning of the soiled surface. In automatic dishwashing, the soiled surface may be, for example, a porcelain cup with tea stain, a porcelain cup with lipstick stain, dishes soiled with simple starches or more complex food soils, or a plastic spatula stained with tomato soup. The test conditions will vary, depending on the type of washing appliance used and the habits of the user. Some machines have considerably longer wash cycles than others. Some users elect to use warm water without a great deal of heating inside the appliance; others use warm or even cold water fill, followed by a warm-up through a built-in electrical coil. Of course, the performance of bleaches and enzymes will be affected by such considerations, and the levels used in fully-formulated detergent and cleaning compositions can be appropriately adjusted.

### Surfactants

The surfactant useful in the present invention compositions is desirably included at levels of from 0.1% to 15% of the composition. The surfactant employed in the compositions of the present invention includes a nonionic surfactant or mixtures of various nonionic surfactants. While a wide range of nonionic surfactants may be selected from for purposes of the mixed nonionic surfactants useful in the present invention compositions, it is necessary that the nonionic surfactant at a minimum comprise a surfactant selected from the ether-capped poly(oxyalkylated) alcohols having the formula:

R¹O[CH₂CH(R³)O]ₓ[CH₂]ₖCH(OH)[CH₂]ⱼOR²

wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1

R¹ and R² are linear or branched, saturated or unsaturated, aliphatic or aromatic hydrocarbon radicals having from 6 to about 22 carbon atoms with 8 to 18 carbon atoms being most preferred. H is R³. Preferably, x is an integer having an average value of from 1 to 20, more preferably from 6 to 15.

Particularly preferred surfactants as described above include those that have a low cloud point of less than about 20°C. These low cloud point surfactants may then be employed in conjunction with a high cloud point surfactant as described in detail below for superior grease cleaning benefits.

Most preferred according to the present invention are those surfactants having the formula:

R¹O[CH₂CH(R³)O]ₓCH₂CH(OH)CH₂OR²

where R¹, R² and R³ are defined as above and x is an integer with an average value of from about 1 to 30, preferably from 1 to 20, and even more preferably from 6 to 18. Most preferred are surfactants wherein R¹ and R² range from 9 to 14, R³ is H forming ethyleneoxy and x ranges from 6 to 15.

Basically, the alcohol surfactants of the present invention comprise three general components, namely a linear or branched alcohol, an alkylene oxide and an alkyl ether end cap. The alkyl ether end cap and the alcohol serve as a hydrophobic, oil-soluble portion of the molecule while the alkylene oxide group forms the hydrophilic, water-soluble portion of the molecule.

It has been surprisingly discovered in accordance with the present invention that significant improvements in spotting and filming characteristics and, when used inconjunction with high cloud point surfactants, in the removal of greasy soils relative to conventional surfactants, are provided via the ether-capped poly(oxyalkylene) alcohol surfactants of the present invention.

It has been surprisingly discovered that the ether-capped poly(oxyalkylene) alcohol surfactants of the present invention in addition to delivering superior cleaning benefits also provide good suds control. This suds control can be clearly seen in the presence of high sudsing surfactants, such as amine oxides, or in the presence of high sudsing soils, such as protenaeous or egg soils.

The ether-capped poly(oxyalkylene) alcohol surfactants of the present invention may be produced by reacting an aliphatic alcohol with an epoxide to form an ether which is then reacted with a base to form a second epoxide. The second epoxide is then reacted with an alkoxylated alcohol to form the novel compounds of the present invention.

The process comprises the first step of providing a glycidyl ether having the formula: 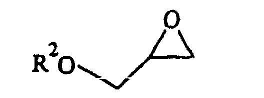 where R² is defined as above. Various glycidyl ethers are available from a number of commercial sources including the Aldrich Chemical Company. Alternatively, the glycidyl ether may be formed from the reaction of a linear or branched, aliphatic or aromatic alcohol of the formula R²OH where R² is defined as above and an epoxide of the formula: 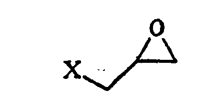 where X is a suitable leaving group. While a number of leaving groups may be employed in the present invention, X is preferably selected from the group consisting of halides including chloride, bromide, and iodide, tosylate, mesylate and brosylate, with chloride and bromide being even more preferred with chloride being the most preferred (e.g. epichlorohydrin).

The linear or branched alcohol and the epoxide are preferably reacted at ratios ranging from about 0.5 equivalents alcohol to 2 equivalents epoxide with 0.95 equivalents alcohol to 1.05 equivalents epoxide more typical under acidic conditions for catalysis purposes. Acids which may be employed as catalyst include mineral acids, including but not limited to H₂SO₄ and H₃PO₄ and Lewis acids including, but not limited to, TiCl₄, Ti(OⁱPr)₄, ZnCl₄, SnCl₄, AlCl₃, and BF₃-OEt₂. Preferred catalysts include the Lewis acids with SnCl₄ and BF₃-OEt₂ being the most preferred. The catalysts are preferably employed at amounts of 0.1 mol % to 2.0 mol % with 0.2 mot % to 1.0 mol % being more typical.

While the reaction may be conducted in the presence of a suitable solvent such as benzene, toluene, dichloromethane, tetrahydrofuran, diethylether, methyl tert-butylether or the like, the reaction is preferably conducted neat or in the absence of solvent. Lastly, the reaction is conducted at temperatures preferably ranging from 40°C to 90°C, more preferably from 50°C to 80°C, and most preferably from 55°C to 65°C.

Upon completion of the reaction, the mixture is treated with a basic material to form the glycidyl ether. The basic material is preferably a strong base such as a hydroxide. Preferred hydroxides include alkali metal hydroxides with sodium being the typical choice. However, one of ordinary skill in the art will recognize that other basic materials may also be employed. The basic material is preferably added at levels of from 0.5 equivalents to 2.5 equivalents, with 0.95 equivalents to 2.0 equivalents being more preferred and 1.0 to 1.5 equivalents being the most preferred.

The product glycidyl ether may then be collected after optional filtration, drying and distillation according to the methods well-known in the art.

To form the surfactant, an ethoxylated alcohol having the formula: 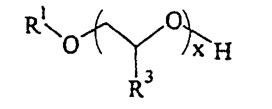 wherein R¹ and x are defined as before in an amount of from 0.80 to 1.5 equivalents is combined with a catalyst as described hereinbefore and heated to a temperature ranging from 50°C to 95°C and more preferably from 60°C to 80°C. The glycidyl ether is then added to the mixture and reacted for from 0.5 hours to 30 hours, more preferably from 1 hour to 24 hours.

The ether-capped poly(oxyalkylated) alcohol surfactant product is then collect by means common in the art such as filtration. If desired, the surfactant may be further treated by stripping, distillation or various other means before use. The surfactants made the process disclosed herein may contain related impurities which will not adversely affect performance.

A representative synthetic route is demonstrated via the following examples.

### EXAMPLE 1

### Preparation of C_{12/13}-alkyl glycidyl ether

Neodol® 23 C_{12/13} alcohol (100.00 g, 0.515 mol, available from the Shell Chemical Co.) and tin (IV) chloride (0.58 g, 2.23 mmol, available from Aldrich) are combined in a 500 mL three-necked, round-bottomed flask fitted with a condenser, argon inlet, addition funnel, magnetic stirrer and internal temperature probe. The mixture is heated to 60 ° C. Epichlorohydrin (47.70 g, 0.515 mol, available from Aldrich) is added dropwise so as to keep the temperature between 60-65 °C. After stirring an additional hour at 60 °C, the mixture is cooled to room temperature. The mixture is treated with a 50% solution of sodium hydroxide (61.80 g, 0.773 mol, 50%) while being stirred mechanically. After addition is completed, the mixture is heated to 90 °C for 1.5 h, cooled, and filtered with the aid of ethanol. The filtrate is separated and the organic phase is washed with water (100 mL), dried over MgSO₄, filtered, and concentrated. Distillation of the product mixture at 100-120 °C (0.1 mm Hg) providing the glycidyl ether as an oil.

### EXAMPLE 2

### Preparation of C_{9/11}-alkyl glycidyl ether

Neodol® 91 C_{9/11} alcohol (100.00 g, 0.632 mol available from the Shell Chemical Co.) and tin (IV) chloride (0.82 g, 3.20 mmol available from Aldrich) are combined in a 500 mL three-necked, round-bottomed flask fitted with a condenser, argon inlet, addition funnel, mechanical stirrer and internal temperature probe. The mixture is heated to 65 °C. Epichlorohydrin (58.46 g, 0.632 mol available from Aldrich) is added dropwise so as to keep the temperature between 60-65 °C. After stirring an additional hour at 60 °C, the mixture is cooled to room temperature and is treated with a 50% solution of sodium hydroxide (61.80 g, 0.773 mol, 50%). After addition is completed the mixture is heated to 90 °C for 3.0 h, cooled, and treated with water to dissolve all of the white solids. The organic phase is dried over MgSO₄, filtered, and concentrated. Distillation of the product mixture at 100 °C (0.1 mm Hg) provided the gylcidyl ether as an oil.

### EXAMPLE 3

### Preparation of C_{12/14}-alkyl glycidyl ether

The procedure of Example 1 is repeated with the substitution of C_{12/14} fatty alcohol for Neodol® 23.

### EXAMPLE 4

### Preparation of C_{14/15}-alkyl glycidyl ether

The procedure of Example 1 is repeated with the substitution of Neodol® 45 C_{14/15} alcohol for Neodol® 23.

### EXAMPLE 5

### Preparation of C_{14/15}-alkyl glycidyl ether

The procedure of Example 1 is repeated with the substitution of Tergitol® 15-S-15 C₁₁₋₁₅ H₂₃₋₃₁ O[CH₂-CH₂]₁₅ H for Neodol® 23.

### EXAMPLE 6

### Preparation of C_{12/14}-alkyl-C_{9/11}-alkyl ethonylated ether capped alcohol surfactant

Neodol® 91-8 C₄₋₁₁ H₁₉₋₂₃ O[CH₂-CH₂O]₈ H (16.60 g, 0.0325 mol Shell Chemical Co.) is placed in to a 250ml three necked round bottom flask fitted with a condenser, argon inlet, addition funnel, magnetic stirrer and internal temperature probe. The contents of the flask are dried under vacuum at 75°C for 15 minutes after establishing an Argon atmosphere, Tin (IV) Chloride (0.25 ml, 2.1 mmol Aldrich) is added to the flask via syringe. The mixture is heated to 60 °C at which point C_{12/14}-alkyl glycidyl ether (10.00 g, 0.039 mol) is added dropwise over 15 min while maintaining a temperature of 75-80°C. After stirring for 18 h at 60 °C. The mixture stirs for an additional hour at 75°C until the glycidyl ether is consumed, as determined by TLC. The mixture is cooled to room temperature and diluted with 1 ml of water. The solution is passed through a 170 g of silica gel (Aldrich 227196, 7x12 diameter) while eluting with 5% Methanol (40 ml) dichloromethane. The filtrate is concentrated by rotary evaporation and then stripped in a Kugelrohr oven (70 °C, 0.1 mm Hg for 30 minutes) to yield product as an oil.

### EXAMPLE 7

### Preparation of C_{12/14}-alkyl-C_{11/15}-alkyl ethoxylated ether capped alcohol surfactant

Tergitol® 15-S-15 (2820.0 g, 3.275 mol Union Carbide) is melted in to a 12 L three necked round bottom flask fitted with a condenser, argon inlet, addition funnel, mechanical stirrer and internal thermometer. The contents of the flask are dried at 75°C for 30 minutes under vacuum. An argon atmosphere is established. Tin (IV) Chloride (25 ml, 0.214 mmol Aldrich) is added to the flask via syringe. The mixture is heated to 85 °C. C_{12/14}-alkyl glycidyl ether (1679.48 g, 6.549 mol) is added dropwise over 1 hour, maintaining the reaction temperature. After stirring for an additional 15 minutes at 75°C, the reaction is quenched with the addition of water (75 ml). The reaction is diluted with 500 ml of 5% methanol dichloromethane. The mixture is cooled to room temperature and then stripped in a Kugelrohr oven (70°C, 0.1 mm Hg for 30 minutes) to yield the surfactant as an oil.

Of course, one of ordinary skill in the art will recognize that the surfactant as described hereinbefore may be employed in combination with other commercially available nonionic surfactants, particularly low foaming nonionic surfactants (LFNIs) to comprise the surfactant of the present invention.

### Low-Foaming Nonionic Surfactant

LFNI may be present in amounts from 0 to 15% by weight, preferably from 0.1% to 10%, and most preferably from 0.25% to 4%. LFNIs are most typically used in automatic dishwashing compositions or ADDs on account of the improved water-sheeting action (especially from glass) which they confer to the product. LNFTs also encompass non-silicone, nonphosphate polymeric materials further illustrated hereinafter which are known to defoam food soils encountered in automatic dishwashing.

Preferred LFNIs include nonionic alkoxylated surfactants, especially ethoxylates derived from primary alcohols, and blends thereof with more sophisticated surfactants, such as the polyoxypropylene/polyoxyethylene/polyoxyprapylene (PO/EO/PO) reverse block polymers. The PO/EO/PO polymer-type surfactants are well-known to have foam suppressing or defoaming action, especially in relation to common food soil ingredients such as egg.

The invention encompasses preferred embodiments wherein LFNI is present, and wherein this component is solid at about 95°F (35°C), more preferably solid at about 77°F (25°C). For ease of manufacture, a preferred LFNI has a melting point between 77°F (25°C) and 140°F (60°C), more preferably between 80°F (26.6°C) and 110°F (43.3°C).

### Measuring Dishwasher Arm RPM Efficiency and Wash Suds Height:

The equipment useful for these measurements are: a Whirlpool Dishwasher (model 900), or a Miele Dishwasher (model G7750) equipped with clear plexiglass door, IBM computer data collection with Labview and Excel Software, proximity sensor (Newark Corp. - model 95F5203) using SCXI interface, and a plastic ruler.

The data is collected as follows. The proximity sensor is affixed to the bottom dishwasher rack on a metal bracket. The sensor faces downward toward the rotating dishwasher arm on the bottom of the machine (distance approximately 2 cm. from the rotating arm). Each pass of the rotating arm is measured by the proximity sensor and recorded. The pulses recorded by the computer are converted to rotations per minute (RPM) of the bottom arm by counting pulses over a 30 second interval. The rate of the arm rotation is directly proportional to the amount of suds in the machine and in the dishwasher pump (i.e., the more suds produced, the slower the arm rotation).

The plastic ruler is clipped to the bottom rack of the dishwasher and extends to the floor of the machine. At the end of the wash cycle, the height of the suds is measured using the plastic ruler (viewed through the clear door) and recorded as suds height.

The following procedure is followed for evaluating ADD compositions for suds production as well as for evaluating nonionic surfactants for utility. (For separate evaluation of nonionic surfactant, a base ADD formula, such as Cascade powder, is used along with the nonionic surfactants which are added separately in glass vials to the dishwashing machine.)

First, the machine is filled with water (adjust water for appropriate temperature and hardness) and proceed through a rinse cycle. The RPM is monitored throughout the cycle (approximately 2 min.) without any ADD product (or surfactants) being added (a quality control check to ensure the machine is functioning properly). As the machine begins to fill for the wash cycle, the water is again adjusted for temperature and hardness, and then the ADD product is added to the bottom of the machine (in the case of separately evaluated surfactants, the ADD base formula is first added to the bottom of the machine then the surfactants are added by placing the surfactant-containing glass vials inverted on the top rack of the machine). The RPM is then monitored throughout the wash cycle. At the end of the wash cycle, the suds height is recorded using the plastic ruler. The machine is again filled with water (adjust water for appropriate temperature and hardness) and runs through another rinse cycle. The RPM is monitored throughout this cycle.

An average RPM is calculated for the 1st rinse, main wash, and final rinse. The %RPM efficiency is then calculated by dividing the average RPM for the test surfactants into the average RPM for the control system (base ADD formulation without the nonionic surfactant). The RPM efficiency and suds height measurements are used to dimension the overall suds profile of the surfactant.

To demonstrate the suds control delivered by the nonionic surfactants of the present invention the following experiment is performed. In a Miele G7750, dishwasher, at 0.001 mol of Calcium per litre (7 grains per gallon) hardness, nil soil, 48°C fill water temperature and 65°C, wash temperature, the arm rotation was measured over the main wash cycle (from time =0 min to time =27 min) and both rinses (rinse 1 from time = 28 min to time = 33 min, and rinse 2 from time = 34 min to end), for the following compositions:
**A.** Base granule + 0.5% by weight of an amine oxide of the formula: 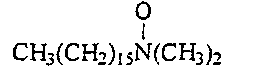
**B.** Base granule + 0.5% by weight of an amine oxide used in A and 2% of the nonionic surfactant of example 7.

| Arm rotation (in rpm) at time (in minutes): | | | | | | | |
|---|---|---|---|---|---|---|---|
| Compositions | 5 | 10 | 15 | 20 | 25 | 30 | 35 |
| A | 48 | 22 | 23 | 24 | 26 | 31 | 40 |
| B | 48 | 47 | 48 | 48 | 47 | 46 | 47 |

See figure 1, for a graph of this information as arm rotation vs. time.
To demonstrate the suds control delivered by the nonionic surfactants of the present invention in the presence of soil and to compare them to known low foaming nonionic surfactants, the following experiment is performed. In a Miele G7750, dishwasher, at 0 mol of Calcium per litre (grains per gallon) hardness, 20g egg soil, 48°C fill water temperature and 65°C, wash temperature, the arm rotation was measured over the main wash cycle (from time =0 min to time =27 min) and both rinses (rinse 1 from time = 28 min to time = 33 min, and rinse 2 from time = 34 min to end), for the following compositions:
**C.** Base granule + 2% by weight of low foaming nonionic surfactant available from BASF under the name PLURAFAC LF404®
**D.** Base granule + 2% of the nonionic surfactant of example 7
**E.** Base granule + 0.5% by weight of an amine oxide used in A above and 2% of the nonionic surfactant of example 7.

| Arm rotation (in rpm) at time (in minutes): | | | | | | | |
|---|---|---|---|---|---|---|---|
| Compositions | 5 | 10 | 15 | 20 | 25 | 30 | 35 |
| C | 39 | 30 | 43 | 44 | 46 | 47 | 45 |
| D | 45 | 45 | 46 | 46 | 47 | 46 | 45 |
| E | 46 | 44 | 45 | 47 | 42 | 47 | 45 |

See figure 2, for a graph of this information as arm rotation vs. time.
The base granule in all compositions comprises(by weight): 53.75% STPP, 14% sodium carbonate, 12% 2R sodium silicate, 12.26% sodium perborate, 0.30% BTA, 0.5% Paraffin Oil (Winog 70), 1.5% Termamyl/Pentaammineacetatocobalt (III) nitrate granule and 1.27% Bleach stable protease.

It can be clearly seen from the above examples that not only do the nonionic surfactants of the present invention suppresses the suds associated with food soils, in this case egg soils, but they also suppress the suds associated with various other cleaning agents, in this case the suds caused by an amine oxide surfactant. Furthermore, as it is shown above, the nonionic surfactants of the present invention provide better suds control than conventional low foaming nonionic surfactants.

### Optional surfactants

Of course, optional detersive surfactants may be included inconjunction with the nonionic surfactants of the present invention. Optional surfactants included in the fully-formulated detergent compositions afforded by the present invention comprises at least 0.01%, preferably from 0.5% to 50%, by weight of detergent composition depending upon the particular surfactants used and the desired effects. In a highly preferred embodiment, the detersive surfactant comprises from 0.5% to 20% by weight of the composition.

The present invention may also include an anionic co-surfactant. However, the automatic dishwashing detergent compositions herein are preferably substantially free from anionic co-surfactants. It has been discovered that certain anionic co-surfactants, particularly fatty carboxylic acids, can cause unsightly films on dishware. When included, the anionic co-surfactant is typically of a type having good solubility in the presence of calcium. Such anionic co-surfactants are further illustrated by sulfobetaines, alkyl(polyethoxy)sulfates (AES), alkyl (polyethoxy)carboxylates, and short chained C₆-C₁₀ alkyl sulfates. However, no such restriction need apply when the compositions are other than automatic dishwashing compositions.

The detersive surfactant can be anionic as discussed above or ampholytic, zwitterionic, or cationic. Mixtures of these surfactants can also be used. Nonlimiting examples of surfactants useful herein include the conventional C₁₁-C₁₈ alkyl benzene sulfonates and primary, secondary and random alkyl sulfates, the C₁₀-C₁₈ alkyl alkoxy sulfates, the C₁₀-C₁₈ alkyl polyglycosides and their corresponding sulfated polyglycosides, C₁₂-C₁₈ alpha-sulfonated fatty acid esters, C₁₂-C₁₈ betaines and sulfobetaines ("sultaines"), C₁₀-C₁₈ amine oxides, and the like. Other conventional useful surfactants are listed in standard texts.

### Detergent Builders

The present invention may include an optional builder in the product composition. The level of detergent salt/builder can vary widely depending upon the end use of the composition and its desired physical form. When present, the compositions will typically comprise at least 1% detergent builder and more typically from 10% to 80%, even more typically from 15% to 50% by weight, of the detergent builder. Lower or higher levels, however, are not meant to be excluded.

Inorganic or P-containing detergent builders include, but are not limited to, the alkali metal, ammonium and alkanolammonium salts of polyphosphates (exemplified by the tripolyphosphates, pyrophosphates, and glassy polymeric metaphosphates), phosphonates, phytic acid, silicates, carbonates (including bicarbonates and sesquicarbonates), sulphates, and aluminosilicates. However, non-phosphate salts are required in some locales. Importantly, the compositions herein function surprisingly well even in the presence of the so-called "weak" builders (as compared with phosphates) such as citrate, or in the so-called "underbuilt" situation that may occur with zeolite or layered silicate builders.

Organic detergent builders suitable for the purposes of the present invention include, but are not restricted to, a wide variety of polycarboxylate compounds.

### Bleaching Agents

Hydrogen peroxide sources are described in detail in Kirk Othmer's Encyclopedia of Chemical Technology, 4th Ed (1992, John Wiley & Sons), Vol. 4, pp. 271-300 "Bleaching Agents (Survey)", and include the various forms of sodium perborate and sodium percarbonate, including various coated and modified forms. An "effective amount" of a source of hydrogen peroxide is any amount capable of measurably improving stain removal (especially of tea stains) from soiled dishware compared to a hydrogen peroxide source-free composition when the soiled dishware is washed by the consumer in a domestic automatic dishwasher in the presence of alkali.

More generally a source of hydrogen peroxide herein is any convenient compound or mixture which under consumer use conditions provides an effective amount of hydrogen peroxide. Levels may vary widely and are usually in the range from 0.1% to 70%, more typically from 0.5% to 30%, by weight of the compositions herein.

The preferred source of hydrogen peroxide used herein can be any convenient source, including hydrogen peroxide itself For example, perborate, e.g., sodium perborate (any hydrate but preferably the mono- or tetra-hydrate), sodium carbonate peroxyhydrate or equivalent percarbonate salts, sodium pyrophosphate peroxyhydrate, urea peroxyhydrate, or sodium peroxide can be used herein. Also useful are sources of available oxygen such as persulfate bleach (e.g., OXONE, manufactured by DuPont). Sodium perborate monohydrate and sodium percarbonate are particularly preferred. Mixtures of any convenient hydrogen peroxide sources can also be used.

A preferred percarbonate bleach comprises dry particles having an average particle size in the range from 500 micrometers to 1,000 micrometers, not more than 10% by weight of said particles being smaller than 200 micrometers and not more than 10% by weight of said particles being larger than 1,250 micrometers. Optionally, the percarbonate can be coated with a silicate, borate or water-soluble surfactants. Percarbonate is available from various commercial sources such as FMC, Solvay and Tokai Denka.

While not preferred for compositions of the present invention which comprise detersive enzymes, the present invention compositions may also comprise as the bleaching agent a chlorine-type bleaching material. Such agents are well known in the art, and include for example sodium dichloroisocyanurate ("NaDCC").

### (a) Bleach Activators

Preferably, the peroxygen bleach component in the composition is formulated with an activator (peracid precursor). The activator is present at levels of from 0.01% to 15%, preferably from 0.5% to 10%, more preferably from 1% to 8%, by weight of the composition. Preferred activators are selected from the group consisting of tetraacetyl ethylene diamine (TAED), benzoylcaprolactam (BzCL), 4-nitrobenzoylcaprolactam, 3-chlorobenzoyl-caprolactam, benzoyloxybenzenesulphonate (BOBS), nonanoyloxybenzenesulphonate (NOBS), phenyl benzoate (PhBz), decanoyloxybenzenesulphonate (C₁₀-OBS), benzoylvalerolactam (BZVL), octanoyloxybenzenesulphonate (C₈-OBS), perhydrolyzable esters and mixtures thereof, most preferably benzoylcaprolactam and benzoylvalerolactam. Particularly preferred bleach activators in the pH range from about 8 to about 9.5 are those selected having an OBS or VL leaving group.

Preferred bleach activators are those described in U.S. Patent 5,130,045, Mitchell et al, and 4,412,934, Chung et al, and copending patent applications WO-A-94/28,103, WO-A-94/28,102, WO-A-94/27,970, WO-A-94/28,104 and copending application to M. Bums, A. D. Willey, R. T. Hartshorn, C. K. Ghosh, entitled "Bleaching Compounds Comprising Peroxyacid Activators Used With Enzymes" WO-A-94/28,106.

The mole ratio of peroxygen bleaching compound (as AvO) to bleach activator in the present invention generally ranges from at least 1:1, preferably from 20:1 to 1:1, more preferably from 10:1 to 3:1.

Quaternary substituted bleach activators may also be included. The present detergent compositions preferably comprise a quaternary substituted bleach activator (QSBA) or a quaternary substituted peracid (QSP); more preferably, the former. Preferred QSBA structures are further described in copending U.S. Patent Nos. 5,460,747, 5,584,888 and 5,578,136.

### (b) Organic Peroxides, especially Diacyl Peroxides

These are extensively illustrated in Kirk Othmer, Encyclopedia of Chemical Technology, Vol. 17, John Wiley and Sons, 1982 at pages 27-90 and especially at pages 63-72. If a diacyl peroxide is used, it will preferably be one which exerts minimal adverse impact on spotting/filming. Preferred is dibenzoyl peroxide.

### (c) Metal-containing Bleach Catalysts

The present invention compositions and methods utilize metal-containing bleach catalysts that are effective for use in ADD compositions. Preferred are manganese and cobalt-containing bleach catalysts.

As a practical matter, and not by way of limitation, the cleaning compositions and cleaning processes herein can be adjusted to provide on the order of at least one part per hundred million of the active bleach catalyst species in the aqueous washing medium, and will preferably provide from 0.01 ppm to 25 ppm, more preferably from 0.05 ppm to 10 ppm, and most preferably from 0.1 ppm to 5 ppm, of the bleach catalyst species in the wash liquor. In order to obtain such levels in the wash liquor of an automatic dishwashing process, typical automatic dishwashing compositions herein will comprise from 0.0005% to 0.2%, more preferably from 0.004% to 0.08%, of bleach catalyst by weight of the cleaning compositions.

### Detersive Enzymes

The compositions of the present invention may also include the presence of at least one detersive enzyme. "Detersive enzyme", as used herein, means any enzyme having a cleaning, stain removing or otherwise beneficial effect in a composition. Preferred detersive enzymes are hydrolases such as proteases, amylases and lipases. Highly preferred for automatic dishwashing are amylases and/or proteases, including both current commercially available types and improved types which, though more bleach compatible, have a remaining degree of bleach deactivation susceptibility.

In general, as noted, preferred compositions herein comprise one or more detersive enzymes. If only one enzyme is used, it is preferably an amyolytic enzyme when the composition is for automatic dishwashing use. Highly preferred for automatic dishwashing is a mixture of proteolytic enzymes and amyloytic enzymes. More generally, the enzymes to be incorporated include proteases, amylases, lipases, cellulases, and peroxidases, as well as mixtures thereof. Other types of enzymes may also be included. They may be of any suitable origin, such as vegetable, animal, bacterial, fungal and yeast origin. However, their choice is governed by several factors such as pH-activity and/or stability optima, thermostability, stability versus active detergents, builders, etc. In this respect bacterial or fungal enzymes are preferred, such as bacterial amylases and proteases, and fungal cellulases.

Enzymes are normally incorporated in the instant detergent compositions at levels sufficient to provide a "cleaning-effective amount". The term "cleaning-effective amount" refers to any amount capable of producing a cleaning, stain removal or soil removal effect on substrates such as fabrics, dishware and the like. Since enzymes are catalytic materials, such amounts may be very small. In practical terms for current commercial preparations, typical amounts are up to about 5 mg by weight, more typically about 0.01 mg to about 3 mg, of active enzyme per gram of the composition. Stated otherwise, the compositions herein will typically comprise from 0.001% to 6%, preferably 0.01%-1% by weight of a commercial enzyme preparation. Protease enzymes are usually present in such commercial preparations at levels sufficient to provide from 0.005 to 0.1 Anson units (AU) of activity per gram of composition. For automatic dishwashing purposes, it may be desirable to increase the active enzyme content of the commercial preparations, in order to minimize the total amount of non-catalytically active materials delivered and thereby improve spotting/filming results.

### pH and Buffering Variation

Many detergent compositions herein will be buffered, i.e., they are relatively resistant to pH drop in the presence of acidic soils. However, other compositions herein may have exceptionally low buffering capacity, or may be substantially unbuffered. Techniques for controlling or varying pH at recommended usage levels more generally include the use of not only buffers, but also additional alkalis, acids, pH-jump systems, dual compartment containers, etc., and are well known to those skilled in the art.

The preferred compositions herein comprise a pH-adjusting component selected from water-soluble alkaline inorganic salts and water-soluble organic or inorganic builders. The pH-adjusting components are selected so that when the composition is dissolved in water at a concentration of 1,000 - 10,000 ppm, the pH remains in the range of above 8, preferably from 9.5 to 11. The preferred nonphosphate pH-adjusting component of the invention is selected from the group consisting of:
(i) sodium carbonate or sesquicarbonate;
(ii) sodium silicate, preferably hydrous sodium silicate having SiO₂:Na₂O ratio of from about 1:1 to about 2:1, and mixtures thereof with limited quantities of sodium metasilicate;
(iii) sodium citrate;
(iv) citric acid;
(v) sodium bicarbonate;
(vi) sodium borate, preferably borax;
(vii) sodium hydroxide; and
(viii) mixtures of (i)-(vii).

Preferred embodiments contain low levels of silicate (i.e. from 3% to 10% SiO₂).

The amount of the pH adjusting component in the instant composition is preferably from 1% to 50%, by weight of the composition. In a preferred embodiment, the pH-adjusting component is present in the composition in an amount from 5% to 40%, preferably from 10% to 30%. by weight.

### Water-Soluble Silicates

The present compositions may further comprise water-soluble silicates. Water-soluble silicates herein are any silicates which are soluble to the extent that they do not adversely affect spotting/filming characteristics of the ADD composition.

### Chelating Agents

The compositions herein may also optionally contain one or more transition-metal selective sequestrants, "chelants" or "chelating agents", e.g., iron and/or copper and/or manganese chelating agents. Chelating agents suitable for use herein can be selected from the group consisting of aminocarboxylates, phosphonates (especially the aminophosphonates), polyfunctionally-substituted aromatic chelating agents, and mixtures thereof. Without intending to be bound by theory, it is believed that the benefit of these materials is due in part to their exceptional ability to control iron, copper and manganese in washing solutions which are known to decompose hydrogen peroxide and/or bleach activators; other benefits include inorganic film prevention or scale inhibition. Commercial chelating agents for use herein include the DEQUEST® series, and chelants from Monsanto, DuPont, and Nalco, Inc.

Aminocarboxylates useful as optional chelating agents are further illustrated by ethylenediaminetetracetates, N-hydroxyethylethylenediaminetriacetates, nitrilotriacetates, ethylenediamine tetraproprionates, triethylenetetraaminehexacetates, diethylenetriamine-pentaacetates, and ethanoldiglycines, alkali metal, ammonium, and substituted ammonium salts thereof In general, chelant mixtures may be used for a combination of functions, such as multiple transition-metal control, long-term product stabilization, and/or control of precipitated transition metal oxides and/or hydroxides.

Polyfunctionally-substituted aromatic chelating agents are also useful in the compositions herein. See U.S. Patent 3,812,044, issued May 21, 1974, to Connor et al. Preferred compounds of this type in acid form are dihydroxydisulfobenzenes such as 1,2-dihydroxy-3,5-disulfobenzene.

A highly preferred biodegradable chelator for use herein is ethylenediamine disuccinate ("EDDS"), especially (but not limited to) the [S,S] isomer as described in U.S. Patent 4, 704,233, November 3, 1987, to Hartman and Perkins. The trisodium salt is preferred though other forms, such as magnesium salts, may also be useful.

Aminophosphonates are also suitable for use as chelating agents in the compositions of the invention when at least low levels of total phosphorus are acceptable in detergent compositions, and include the ethylenediaminetetrakis (methylenephosphonates) and the diethylenetriaminepentakis (methylene phosphonates). Preferably, these aminophosphonates do not contain alkyl or alkenyl groups with more than about 6 carbon atoms.

If utilized, chelating agents or transition-metal-selective sequestrants will preferably comprise from 0.001% to 10%, more preferably from 0.05% to 1% by weight of the compositions herein.

### Dispersant Polymer

Preferred compositions herein may additionally contain a dispersant polymer. When present, a dispersant polymer in the instant compositions is typically at levels in the range from 0 to 25%, preferably from 0.5% to 20%, more preferably from 1% to 8% by weight of the composition. Dispersant polymers are useful for improved filming performance of the present compositions, especially in higher pH embodiments, such as those in which wash pH exceeds about 9.5. Particularly preferred are polymers which inhibit the deposition of calcium carbonate or magnesium silicate on dishware.

### Material Care Agents

The present compositions may contain one or more material care agents which are effective as corrosion inhibitors and/or anti-tarnish aids. Such materials are preferred components of machine dishwashing compositions especially in certain European countries where the use of electroplated nickel silver and sterling silver is still comparatively common in domestic flatware, or when aluminum protection is a concern and the composition is low in silicate. Generally, such material care agents include metasilicate, silicate, bismuth salts, manganese salts, paraffin, triazoles, pyrazoles, thiols, mercaptans; aluminum fatty acid salts, and mixtures thereof.

When present, such protecting materials are preferably incorporated at low levels, e.g., from 0.01% to 5% of the ADD composition.

### Adjunct Materials

Detersive ingredients or adjuncts included in the instant compositions can include one or more materials for assisting or enhancing cleaning performance, treatment of the substrate to be cleaned, or designed to improve the aesthetics of the compositions. Adjuncts which can also be included in compositions of the present invention, at their conventional art-established levels for use (generally, adjunct materials comprise, in total, from 30% to 99.9%, preferably from 70% to 95%, by weight of the compositions), include other active ingredients such as non-phosphate builders, chelants, enzymes, dispersant polymers (e.g., from BASF Corp. or Rohm & Haas), color speckles, silvercare, anti-tarnish and/or anti-corrosion agents, silicates, dyes, fillers, germicides, alkalinity sources, hydrotropes, anti-oxidants, enzyme stabilizing agents, perfumes, solubilizing agents, carriers, processing aids, pigments, and pH control agents.

Depending on whether a greater or lesser degree of compactness is required, filler materials can also be present in the instant compositions. These include sucrose, sucrose esters, sodium sulfate, potassium sulfate, etc., in amounts up to 70%, preferably from 0% to 40% of the composition. Preferred filler is sodium sulfate, especially in good grades having at most low levels of trace impurities.

Sodium sulfate used herein preferably has a purity sufficient to ensure it is nonreactive with bleach; it may also be treated with low levels of sequestrants, such as phosphonates or EDDS in magnesium-salt form. Note that preferences, in terms of purity sufficient to avoid decomposing bleach, applies also to pH-adjusting component ingredients, specifically including any silicates used herein.

Hydrotrope materials such as sodium benzene sulfonate, sodium toluene sulfonate, sodium cumene sulfonate, etc., can be present, e.g., for better dispersing surfactant.

Bleach-stable perfumes (stable as to odor); and bleach-stable dyes such as those disclosed in U.S. Patent 4,714,562, Roselle et al, issued December 22, 1987 can also be added to the present compositions in appropriate amounts.

Since the compositions herein can contain water-sensitive ingredients or ingredients which can co-react when brought together in an aqueous environment, it is desirable to keep the free moisture content at a minimum, e.g., 7% or less, preferably 5% or less of the compositions; and to provide packaging which is substantially impermeable to water and carbon dioxide. Coating measures have been described herein to illustrate a way to protect the ingredients from each other and from air and moisture. Plastic bottles, including refillable or recyclable types, as well as conventional barrier cartons or boxes are another helpful means of assuring maximum shelf-storage stability. As noted, when ingredients are not highly compatible, it may further be desirable to coat at least one such ingredient with a low-foaming nonionic surfactant for protection. There are numerous waxy materials which can readily be used to form suitable coated particles of any such otherwise incompatible components; however, the formulator prefers those materials which do not have a marked tendency to deposit or form films on dishes including those of plastic construction.

The following nonlimiting examples further illustrate the present invention.

### EXAMPLE 8

An automatic dishwashing detergent composition is prepared as follows:

| Ingredients: | Weight% | |
|---|---|---|
| B | A | |
| Sodium Tripolyphosphate (STPP) | 24.0 | 45 |
| Sodium carbonate | 20.0 | 13.5 |
| Hydrated 2.0r silicate | 15 | 13.5 |
| nonionic surfactants ¹ | 2.0 | 2.0 |
| Tergitol 15S9 Nonionic surfactant² | 1.0 | 1.0 |
| Polymer³ | 4.0 | -- |
| Protease (4% active) | 0.83 | 0.83 |
| Amylase (0.8% active) | 0.5 | 0.5 |
| Perborate monohydrate (15.5% Active AvO)⁴ | 14.5 | 14.5 |
| Cobalt catalyst⁵ | 0.008 | -- |
| Water, sodium sulfate and misc. | Balance | Balance |

| | | |
|---|---|---|
| ¹ Ether-capped poly(oxyalkylated) alcohol of EXAMPLE 6 | | |
| ² Ethoxylated secondary alcohol supplied by Union Carbide (cloud point = 60°C). | | |
| ³ Terpolymer selected from either 60% acrylic acid/20% maleic acid/20% ethyl acrylate, or 70% acrylic acid/10% maleic acid/20% ethyl acrylate. | | |
| ⁴ The AvO level of the above formula is 2.2%. | | |
| ⁵ Pentaammineacetatocobalt(III) nitrate. | | |

The ADD's of the above dishwashing detergent composition examples may be used to wash lipstick-stained plastic and ceramic, tea-stained cups, starch-soiled and spaghetti-soiled dishes, milk-soiled glasses, starch, cheese, egg or babyfood-soiled flatware, and tomato-stained plastic spatulas by loading the soiled dishes in a domestic automatic dishwashing appliance and washing using either cold fill, 60°C peak, or uniformly 45-50°C wash cycles with a product concentration of the exemplary compositions of from 1,000 to 10,000 ppm, with excellent results.

The following examples further illustrate phosphate built ADD compositions which contain a bleach/enzyme particle, but are not intended to be limiting thereof. All percentages noted are by weight of the finished compositions, other than the perborate (monohydrate) component, which is listed as AvO.

### EXAMPLES 9 - 10

| | 9 | 10 |
|---|---|---|
| Catalyst ¹ | 0.008 | 0.004 |
| Savinase™ 12T | -- | 1.1 |
| Protease D | 0.9 | -- |
| Duramyl™ | 1.5 | 0.75 |
| STPP | 31.0 | 30.0 |
| Na₂CO₃ | 20.0 | 30.5 |
| Polymer² | 4.0 | -- |
| Perborate (AvO) | 2.2 | 0.7 |
| Dibenzoyl Peroxide | 0.2 | 0.15 |
| 2 R Silicate (SiO₂) | 8.0 | 3.5 |
| Paraffin | 0.5 | 0.5 |
| Benzotriazole | 0.3 | 0.15 |
| nonionic surfactant₃ | 1.0 | 1.0 |
| Sodium Sulfate, Moisture ---------Balance---------- | | |

| | | |
|---|---|---|
| ¹ Pentaammineacetatocobalt (III) nitrate; may be replaced by MnTACN. | | |
| ² Polyacrylate or Acusol 480N or polyacrylate/polymethacrylate copolymers. | | |
| ³ A nonionic surfactant prepared according to EXAMPLE 6. | | |

In Compositions of Examples 9 and 10, respectively, the catalyst and enzymes are introduced into the compositions as 200-2400 micron composite particles which are prepared by spray coating, fluidized bed granulation, marumarizing, prilling or flaking/grinding operations. If desired, the protease and amylase enzymes may be separately formed into their respective catalyst/enzyme composite particles, for reasons of stability, and these separate composites added to the compositions.

### EXAMPLES 11 and 12

Granular dishwashing detergents are as follows:

| | 11 | 12 |
|---|---|---|
| Composite Particle | 1.5 | 0.75 |
| Savinase™ 12T | 2.2 | - |
| Protease D | -- | 0.45 |
| STPP | 34.5 | 30.0 |
| Na₂CO₃ | 20.0 | 30.5 |
| Acusol 480N | 4.0 | -- |
| Perborate(AvO) | 2.2 | 0.7 |
| 2 R Silicate(SiO₂) | 8.0 | 3.5 |
| Paraffin | -- | 0.5 |
| Benzotriazole | -- | 0.15 |
| nonionic surfactant ¹ | 1.0 | 1.0 |
| LF404² | 1.0 | 0.75 |
| Sodium Sulfate, Moisture ---to balance---------- | | |

| | | |
|---|---|---|
| ¹ Prepared according to EXAMPLE 6. | | |
| ² A blend of ehtoxylated/propoxylated nonionic surfactants available from BASF. | | |

### EXAMPLE 13

Light-duty liquid dishwashing detergent formulae are prepared as follows:

**Composition**

| Ingredient | A | B | C |
|---|---|---|---|
| | % Weight | | |
| Surfactant ¹ | 1.00 | 2.00 | 1.50 |
| AES | 32.00 | 33.00 | 29.00 |
| Amine Oxide Surfactant | 5.00 | 4.50 | 6.00 |
| Betaine Surfactant | 3.00 | 5.00 | 1.75 |
| Perfume | 0.18 | 0.18 | 0.18 |
| Water and minors | --------------- Balance ---------------- | | |

| | | | |
|---|---|---|---|
| ¹ Prepared according to EXAMPLE 6 | | | |

### EXAMPLE 14

An automatic dishwashing detergent tablet is prepared from the composition as follows:

| Ingredients: | Weight% | |
|---|---|---|
| | A | B |
| Sodium Tripolyphosphate (STPP) | 50.0 | 47.0 |
| Sodium carbonate | 14.0 | 15 |
| Hydrated 2.0r silicate | 8.0 | 5.0 |
| nonionic surfactant¹ | 0.4 | 2.0 |
| Tergitol 15S9 Nonionic surfactant² | 1.0 | 1.0 |
| Polymer³ | 4.0 | -- |
| Protease (4% active) | 2.0 | 1.50 |
| Amylase (0.8% active) | --- | 0.5 |
| Perborate monohydrate (15.5% Active AvO)⁴ | 1.5 | 1.5 |
| Cobalt catalyst⁵ | 0.008 | -- |
| TAED | --- | 2.2 |
| Benzotriazole | 0.3 | --- |
| Paraffin Oil⁶ | 0.5 | --- |
| Water, sodium sulfate and misc. | Balance | Balance |

| | | |
|---|---|---|
| ¹ Ether-capped poly(oxyalkylated) alcohol of EXAMPLE 6 | | |
| ² Ethoxylated secondary alcohol supplied by Union Carbide (cloud point = 60°C). | | |
| ³ Polyacrylate polymer blended with HEDP. | | |
| ⁴ The AvO level of the above formula is 2.2%. | | |
| ⁵ Pentaammineacetatocobalt(III) nitrate. | | |
| ⁶ Winog 70 available from Wintershall, Salzbergen, Germany. | | |

The ADD's of the above dishwashing detergent composition examples may be used to wash lipstick-stained plastic and ceramic, tea-stained cups, starch-soiled and spaghetti-soiled dishes, milk-soiled glasses, starch, cheese, egg or babyfood- soiled flatware, and tomato-stained plastic spatulas by loading the soiled dishes in a domestic automatic dishwashing appliance and washing using either cold fill, 60°C peak, or uniformly 45-50°C wash cycles with a product concentration of the exemplary compositions of from 1,000 to 10,000 ppm, with excellent results.

### EXAMPLE 15

A hard surface cleaning composition of the present invention is illustrated as follows:

| Weight % | | | | | | |
|---|---|---|---|---|---|---|
| Ingredients | 18 | 19 | 20 | 21 | 22 | 23 |
| Surfactant¹ | 0.25 | 3.5 | 5.5 | 6.5 | 6.1 | 9.5 |
| Sodium hypochlorite | 0.9 | 1.4 | 1.4 | -- | -- | -- |
| Calcium hypochlorite | -- | -- | -- | 0.5 | -- | -- |
| Sodium dichlorocyanurate | -- | -- | -- | -- | 1.2 | 2.0 |
| Tetrapotassium pyrophos. | 6.0 | -- | -- | -- | 13.0 | -- |
| Tripotassium phosphate | 2.0 | -- | -- | -- | 12.0 | -- |
| Sodium tripolyphosphate | -- | -- | -- | 1.6 | -- | -- |
| Calcium carbonate | -- | -- | -- | -- | 39.0 | 1.1 |
| Calcium oxide | -- | -- | -- | -- | 2.8 | -- |
| Perlite abrasive | 6.5 | -- | -- | -- | 22.5 | 0.5 |
| Sodium hydroxide | 0.8 | 1.6 | 1.8 | 0.8 | 1.1 | 1.0 |
| Potassium hydroxide | --- | -- | -- | 0.85 | -- | -- |
| Dyes | 0.75 | 0.28 | 0.28 | 0.28 | -- | -- |
| Lanolin | -- | -- | -- | -- | -- | 2.1 |
| Carboxymethylcellulose | -- | -- | -- | -- | -- | 2.6 |
| Water/Misc. | bal. | bal. | bal. | bal. | bal. | bal. |

### EXAMPLE 16

Liquid gel-like automatic dishwashing detergent compositions according to the present invention as prepared as followed:

| | | |
|---|---|---|
| STPP builder | 17.5 | 16 |
| K carbonate | 8 | - |
| Na carbonate | - | 1.5 |
| K hydroxide | 2 | 2.0 |
| K silicate | 4 | 1.5 |
| Na silicate | 2 | 3 |
| thickener | 1 | 1 |
| Nitric acid | 0.02 | 0.02 |
| Al tristearate | 0.1 | - |
| polymer dispersant² | 0.5 | - |
| Na benzoate | 0.8 | 0.5 |
| Surfactant¹ | 1.0 | 2.0 |
| Perborate | | 2.2 |
| Na hypochlorite | 1.5 | - |
| Water and Minors | balance | balance |

| | | |
|---|---|---|
| ¹ Ether-capped poly(oxyalkylated) alcohol of EXAMPLE 6 | | |
| ²sodium polyacrylate of 4500 m.w. | | |

## Claims

1. A hard surface cleaning composition comprising:
(a) from 0.1% to 15% by weight of the composition of surfactant, wherein said surfactant comprises an ether-capped poly(oxyalkylated) alcohol surfactant having the formula:
R¹O[CH₂CH(R³)O]ₓ[CH₂]ₖCH(OH)[CH₂]ⱼOR²
wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1 ;
(b) from 0.1% to 99% by weight of the composition of detergent adjunct ingredients.

2. A detergent composition comprising:
(a) from 0.1% to 15% by weight of the composition of surfactant, wherein said surfactant comprises an ether-capped poly(oxyalkylated) alcohol surfactant having the formula:
R¹O[CH₂CH(R³)O]ₓ[CH₂]ₖCH(OH)[CH₂]ⱼOR²
wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1;
(b) from 0.1% to 99% by weight of the composition of detergent adjunct ingredients.

3. An automatic dishwashing composition comprising:
(a) from 0.1% to 15% by weight of the composition of surfactant, wherein said surfactant comprises an ether-capped poly(oxyalkylated) alcohol surfactant having the formula:
R¹O[CH₂CH(R³)O]ₓ[CH₂]ₖCH(OH)[CH₂]ⱼOR²
wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1;
(b) from 0.1% to 99% by weight of the composition of detergent adjunct ingredients.

4. An automatic dishwashing rinse-aid composition comprising:
(a) from 0.1% to 15% by weight of the composition of surfactant, wherein said surfactant comprises an ether-capped poly(oxyalkylated) alcohol surfactant having the formula:
R¹O[CH₂CH(R³)O]ₓ[CH₂]ₖCH(OH)[CH₂]ⱼOR²
wherein R ¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1;
(b) from 0.1% to 99% by weight of the composition of detergent adjunct ingredients.

5. The composition according to any of claims 1 to 4 wherein said detergent adjunct ingredients are selected from the group consisting of builders, surfactant, bleaching agents, enzymes, and mixtures thereof.

6. The composition according to any of claims 1 to 5 wherein said composition includes an enzyme selected from the group consisting of protease enzymes, amylase enzymes and mixtures thereof.

7. The composition according to any of claims 1 to 6 wherein said composition includes a bleach system and said bleach system comprises a source of hydrogen peroxide and an additional ingredient selected from bleach activators, bleach catalysts and mixtures thereof.

8. The composition as claimed in Claim 7 wherein said bleach system comprises a source of hydrogen peroxide and a bleach catalyst having the formula:
[Co(NH₃)ₙ(M)ₘ(B)_{b}] T_{y}
wherein cobalt is in the +3 oxidation state; n is 4 or 5; M is one or more ligands coordinated to the cobalt by one site; m is 0, 1 or 2; B is a ligand coordinated to the cobalt by two sites; b is 0 or I, and when b=0, then m+n = 6, and when b=1, then m=0 and n=4; and T is one or more appropriately selected counteranions present in a number y, where y is an integer to obtain a charge-balanced salt; and wherein further said catalyst has a base hydrolysis rate constant of less than 0.23 M⁻¹ s⁻¹ (25°C).

9. The composition according to any of claims 1 to 8 wherein said composition includes an amine oxide.

10. The composition according to any of claims 1 to 9 wherein said composition is free of silicone and phosphate ester suds suppressors.

11. A method of washing tableware in a domestic automatic dishwashing appliance, said method comprising treating the soiled tableware in an automatic dishwasher with an aqueous alkaline bath comprising an automatic dishwashing composition according to any of claims 3 to 9.

12. A method for the suppression of suds, said method comprising the step of adding an effective amount of a suds suppressing composition to an aqueous cleaning solution, said composition comprising:
from about 0.1% to about 15% by weight of the composition of surfactant, wherein said surfactant comprises an ether-capped poly(oxyalkylated) alcohol surfactant having the formula:
R¹O[CH₂CH(R³)O]ₓ[CH₂]ₖCH(OH)[CH₂]ⱼOR²
wherein R¹ and R² are linear or branched, saturated or unsaturated, aliphatic or aromatic hydrocarbon radicals having from 6 to 22 carbon atoms; R³ is H, x is an integer having an average value from 1 to 40, and k and j are integers having a value of 1 ; and
(b) from about 0.1% to about 99% by weight of the composition of detergent adjunct ingredients.

13. A method for the suppression of suds according to claim 12, wherein said aqueous cleaning solution is in an automatic dishwashing appliance.

## Patentansprüche

1. Reinigungszusammensetzung für harte Oberflächen, umfassend:
(a) 0,1 bis 15 Gew.-% der Zusammensetzung an Tensid, wobei das Tensid ein ether-verkapptes polyoxyalkyliertes Alkoholtensid umfaßt, mit der Formel:
R¹O[CH₂CH(R³)O]ₓ[CH₂]ₖCH(OH)[CH₂]ⱼOR²
worin R¹ und R² lineare oder verzweigte, gesättigte oder ungesättigte, aliphatische oder aromatische Kohlenwasserstoffgruppen mit 6 bis 22 Kohlenstoff-atomen sind; R³ H ist; x eine ganze Zahl mit einem durchschnittlichen Wert von 1 bis 40 ist, und k und j ganze Zahlen mit einem Wert von 1 sind;
(b) 0,1 bis 99 Gew.-% der Zusammensetzung an Detergenshilfsmittelbestandteilen.

2. Detergenszusammensetzung, umfassend:
(a) 0,1 bis 15 Gew.-% der Zusammensetzung an Tensid, wobei das Tensid ein ether-verkapptes polyoxyalkyliertes Alkoholtensid umfaßt, mit der Formel:
R¹O[CH₂CH(R³)O]ₓ[CH₂]ₖCH(OH)[CH₂]ⱼOR²
worin R¹ und R² lineare oder verzweigte, gesättigte oder ungesättigte, aliphatische oder aromatische Kohlenwasserstoffgruppen mit 6 bis 22 Kohlenstoff-atomen sind; R³ H ist; x eine ganze Zahl mit einem durchschnittlichen Wert von 1 bis 40 ist, und k und j ganze Zahlen mit einem Wert von 1 sind;
(b) 0,1 bis 99 Gew.-% der Zusammensetzung an Detergenshilfsmittelbestandteilen.

3. Zusammensetzung zum maschinellen Geschirrspülen, umfassend:
(a) 0,1 bis 15 Gew.-% der Zusammensetzung an Tensid, wobei das Tensid ein ether-verkapptes polyoxyalkyliertes Alkoholtensid umfaßt, mit der Formel:
R¹O[CH₂CH(R³)O]ₓ[CH₂]ₖCH(OH)[CH₂]ⱼOR²
worin R¹ und R² lineare oder verzweigte, gesättigte oder ungesättigte, aliphatische oder aromatische Kohlenwasserstoffgruppen mit 6 bis 22 Kohlenstoff-atomen sind; R³ H ist; x eine ganze Zahl mit einem durchschnittlichen Wert von 1 bis 40 ist, und k und j ganze Zahlen mit einem Wert von 1 sind;
(b) 0,1 bis 99 Gew.-% der Zusammensetzung an Detergenshilfsmittelbestandteilen.

4. Klarspülerzusammensetzung zum maschinellen Geschirrspülen, umfassend:
(a) 0,1 bis 15 Gew.-% der Zusammensetzung an Tensid, wobei das Tensid ein ether-verkapptes polyoxyalkyliertes Alkoholtensid umfaßt, mit der Formel:
R¹O[CH₂CH(R³)O]ₓ[CH₂]ₖCH(OH)[CH₂]ⱼOR²
worin R¹ und R² lineare oder verzweigte, gesättigte oder ungesättigte, aliphatische oder aromatische Kohlenwasserstoffgruppen mit 6 bis 22 Kohlenstoff-atomen sind; R³ H ist; x eine ganze Zahl mit einem durchschnittlichen Wert von 1 bis 40 ist, und k und j ganze Zahlen mit einem Wert von 1 sind;
(b) 0,1 bis 99 Gew.-% der Zusammensetzung an Detergenshilfsmittelbestandteilen.

5. Zusammensetzung nach irgendeinem der Ansprüche 1 bis 4, wobei die Detergenshilfsmittelbestandteile ausgewählt sind aus der Gruppe, bestehend aus Buildern, Tensiden, Bleichmitteln, Enzymen und Mischungen davon.

6. Zusammensetzung nach irgendeinem der Ansprüche 1 bis 5, wobei die Zusammensetzung ein Enzym beinhaltet, ausgewählt aus der Gruppe, bestehend aus Proteaseenzymen, Amylaseenzymen und Mischungen davon.

7. Zusammensetzung nach irgendeinem der Ansprüche 1 bis 6, wobei die Zusammensetzung ein Bleichsystem beinhaltet und das Bleichsystem eine Quelle für Wasserstoffperoxid und einen zusätzlichen Bestandteil umfaßt, ausgewählt aus Bleichaktivatoren, Bleichkatalysatoren und Mischungen davon.

8. Zusammensetzung nach Anspruch 7, wobei das Bleichsystem eine Quelle für Wasserstoffperoxid und einen Bleichkatalysator der Formel:
[Co(NH₃)ₙ(M)ₘ(B)_{b}]T_{y}
umfaßt, wobei Kobalt in der Oxidationsstufe +3 vorliegt; n 4 oder 5 ist; M ein oder mehrere Ligand(en) ist, koordiniert mit dem Kobalt an einer Seite; m 0, 1 oder 2 ist; B ein Ligand ist, koordiniert mit dem Kobalt an zwei Seiten; b gleich O oder 1 ist, und wenn b=0, dann ist m+n = 6, und wenn b=1, dann ist m=0 und n=4; und T ein oder mehrere geeignet ausgewählte(s) Gegenanion(en) ist, vorliegend in einer Zahl y, wobei y eine ganze Zahl ist, so gewählt, daß ein ladungsausgeglichenes Salz erhalten wird; und wobei weiterhin der Katalysator eine Basenhydrolysegeschwindigkeitskonstante von weniger als 0,23 M⁻¹ s⁻¹ (25°C) besitzt.

9. Zusammensetzung nach irgendeinem der Ansprüche 1 bis 8, wobei die Zusammensetzung ein Aminoxid enthält.

10. Zusammensetzung nach irgendeinem der Ansprüche 1 bis 9, wobei die Zusammensetzung frei von Silikon- und Phosphatester-Schaumunterdrückern ist.

11. Verfahren zum Waschen von Geschirr in einem automatischen Haushalts-Geschirrspülgerät, wobei das Verfahren die Behandlung des verschmutzten Geschirrs in einem automatischen Geschirrspüler umfaßt mittels eines wässrigen alkalischen Bades, umfassend eine Zusammensetzung zum maschinellen Geschirrspülen nach irgendeinem der Ansprüche 3 bis 9.

12. Verfahren zur Unterdrückung von Schäumen, wobei das Verfahren den Schritt der Zugabe einer wirksamen Menge einer Schaumunterdrückungszusammensetzung zu einer wässrigen Reinigungslösung umfaßt, wobei die Zusammensetzung umfaßt:
etwa 0,1 bis etwa 15 Gew.-% der Zusammensetzung an Tensid, wobei das Tensid ein ether-verkapptes polyoxyalkyliertes Alkoholtensid umfaßt, mit der Formel:
R¹O[CH₂CH(R³)O]ₓ[CH₂]ₖCH(OH)[CH₂]ⱼOR²
worin R¹ und R² lineare oder verzweigte, gesättigte oder ungesättigte, aliphatische oder aromatische Kohlenwasserstoffgruppen mit 6 bis 22 Kohlenstoffatomen sind; R³ H ist; x eine ganze Zahl mit einem durchschnittlichen Wert von 1 bis 40 ist, und k und j ganze Zahlen mit einem Wert von 1 sind; und
(b) 0,1 bis 99 Gew.-% der Zusammensetzung an Detergenshilfsmittelbestandteilen.

13. Verfahren zur Unterdrückung von Schäumen nach Anspruch 12, wobei die wässrige Reinigungslösung sich in einem automatischen Geschirrspülgerät befindet.

## Revendications

1. Composition de nettoyage des surfaces dures, comprenant:
(a) de 0,1 % à 15%, en poids de la composition, de tensioactif, où ledit tensioactif comprend un tensioactif alcool poly(oxyalkylé) à terminaison éther de formule:
R¹O[CH₂CH(R³)O]ₓ[CH₂]ₖCH(OH)[CH₂]ⱼOR²
dans laquelle R¹ et R² sont des radicaux d'hydrocarbures aliphatiques ou aromatiques, saturés ou insaturés, linéaires ou ramifiés, ayant 6 à 22 atomes de carbone; R³ est H; x est un entier d'une valeur moyenne de 1 à 40, et k et j sont des entiers ayant une valeur de 1;
(b) de 0,1% à 99%, en poids de la composition, d'ingrédients additifs de détergent.

2. Composition détergente comprenant:
(a) de 0,1% à 15%, en poids de la composition, de tensioactif, où ledit tensioactif comprend un tensioactif alcool poly(oxyalkylé) à terminaison éther de formule:
R¹O[CH₂CH(R³)O]ₓ[CH₂]ₖCH(OH)[CH₂]ⱼOR²
dans laquelle R¹ et R² sont des radicaux d'hydrocarbures aliphatiques ou aromatiques, saturés ou insaturés, linéaires ou ramifiés, ayant 6 à 22 atomes de carbone; R³ est H; x est un entier d'une valeur moyenne de 1 à 40, et k et j sont des entiers ayant une valeur de 1;
(b) de 0,1% à 99%, en poids de la composition, d'ingrédients additifs de détergent.

3. Composition pour le lavage automatique de la vaisselle, comprenant:
(a) de 0,1% à 15%, en poids de la composition, de tensioactif, où ledit tensioactif comprend un tensioactif alcool poly(oxyalkylé) à terminaison éther de formule:
R¹O[CH₂CH(R³)O]ₓ[CH₂]ₖCH(OH)[CH₂]ⱼOR²
dans laquelle R¹ et R² sont des radicaux d'hydrocarbures aliphatiques ou aromatiques, saturés ou insaturés, linéaires ou ramifiés, ayant 6 à 22 atomes de carbone; R³ est H; x est un entier d'une valeur moyenne de 1 à 40, et k et j sont des entiers ayant une valeur de 1;
(b) de 0,1% à 99%, en poids de la composition, d'ingrédients additifs de détergent.

4. Composition d'auxiliaire de rinçage pour le lavage automatique de la vaisselle, comprenant:
(a) de 0,1% à 15%, en poids de la composition, de tensioactif, où ledit tensioactif comprend un tensioactif alcool poly(oxyalkylé) à terminaison éther de formule:
R¹O[CH₂CH(R³)O]ₓ[CH₂]ₖCH(OH)[CH₂]ⱼOR²
dans laquelle R¹ et R² sont des radicaux d'hydrocarbures aliphatiques ou aromatiques, saturés ou insaturés, linéaires ou ramifiés, ayant 6 à 22 atomes de carbone; R³ est H; x est un entier d'une valeur moyenne de 1 à 40, et k et j sont des entiers ayant une valeur de 1;
(b) de 0,1% à 99%, en poids de la composition, d'ingrédients additifs de détergent.

5. Composition selon l'une quelconque des revendications 1 à 4, dans laquelle lesdits ingrédients additifs de détergent sont choisis dans le groupe constitué par les adjuvants, les tensioactifs, les agents de blanchiment, les enzymes et leurs mélanges.

6. Composition selon l'une quelconque des revendications 1 à 5, dans laquelle ladite composition comporte une enzyme choisie dans le groupe constitué par les enzymes protéase, les enzymes amylase et leurs mélanges.

7. Composition selon l'une quelconque des revendications 1 à 6, dans laquelle ladite composition comporte un système de blanchiment et ledit système de blanchiment comprend une source de peroxyde d'hydrogène et un ingrédient supplémentaire choisi parmi les activateurs de blanchiment, les catalyseurs de blanchiment et leurs mélanges.

8. Composition selon la revendication 7, dans laquelle ledit système de blanchiment comprend une source de peroxyde d'hydrogène et un catalyseur de blanchiment de formule:
[Co(NH₃)ₙ(M)ₘ(B)_{b}]T_{y}
dans laquelle le cobalt est dans l'état d'oxydation +3; n vaut 4 ou 5; M représente un ou plusieurs ligands coordinés au cobalt par un site; m vaut 0, 1 ou 2; B est un ligand coordiné au cobalt par deux sites; b vaut 0 ou 1, et lorsque b = 0, m+n = 6, et lorsque b = 1, m = 0 et n = 4; et T représente un ou plusieurs contre-anions convenablement choisis, présents en nombre de y, où y est un.entier permettant d'obtenir un sel équilibré en charges; et dans laquelle, en outre, ledit catalyseur a une constante de vitesse d'hydrolyse basique inférieure à 0,23 M⁻¹s⁻¹ (25°C).

9. Composition selon l'une quelconque des revendications 1 à 8, dans laquelle ladite composition comporte un oxyde d'amine.

10. Composition selon l'une quelconque des revendications 1 à 9, ladite composition étant dépourvue d'agents anti-mousse de type ester phosphate et silicone.

11. Procédé de lavage de la vaisselle dans un lave-vaisselle automatique domestique, ledit procédé comprenant le traitement de la vaisselle sale dans un lave-vaisselle automatique avec un bain alcalin aqueux comprenant une composition pour le lavage automatique de la vaisselle selon l'une quelconque des revendications 3 à 9.

12. Procédé pour la suppression des mousses, ledit procédé comprenant l'étape consistant à ajouter une quantité efficace d'une composition anti-mousse dans une solution aqueuse de nettoyage, ladite composition comprenant:
d'environ 0,1% à environ 15%, en poids de la composition, de tensioactif, où ledit tensioactif comprend un tensioactif alcool poly(oxyalkylé) à terminaison éther de formule:
R¹O[CH₂CH(R³)O]ₓ[CH₂]ₖCH(OH)[CH₂]ⱼOR²
dans laquelle R¹ et R² sont des radicaux d'hydrocarbures aliphatiques ou aromatiques, saturés ou insaturés, linéaires ou ramifiés, ayant 6 à 22 atomes de carbone; R³ est H; x est un entier d'une valeur moyenne de 1 à 40, et k et j sont des entiers ayant une valeur de 1;
(b) d'environ 0,1% à environ 99%, en poids de la composition, d'ingrédients additifs de détergent.

13. Procédé pour la suppression des mousses selon la revendication 12, dans lequel ladite solution aqueuse de nettoyage se trouve dans un lave-vaisselle automatique.
